# EUROPEAN PATENT APPLICATION

(11) **EP 4 772 016 A1**
(43) Date of publication of application: **08.07.2026**
(21) Application number: 24859216.4
(22) Date of filing: 18.07.2024
(51) Int. Cl.: A01G 7/00, G06T 7/00

(54) **VEGETATION MANAGEMENT SYSTEM AND VEGETATION MANAGEMENT METHOD**

(30) Priority: 30.08.2023 JP 2023140396
(71) Applicant: Hitachi, Ltd., Tokyo 100-8280 (JP)
(72) Inventor: YUNG Ching Man, Tokyo 100-8280 (JP); ZHAO, Yu, Tokyo 100-8280 (JP); YAMAMOTO, Tomonori, Tokyo 100-8280 (JP)
(74) Representative: Mewburn Ellis LLP
(86) International application number: PCT/JP2024/025833
(87) International publication number: WO 2025/047172

(57) **Abstract**

A system identifies a vegetation boundary in a target area based on a remote sensing image and DEM data of the target area and generates a height map representing a height at each position in the target area. The system detects, from the height map, an edge treetop that is a treetop within a buffer distance from an asset in the target area. The system estimates a tree crown size corresponding to the height represented by the height map by using a plant allometry model that is a domain knowledge-based model that takes height as input and outputs tree crown size. The system estimates a tree crown area from the tree crown size corresponding to the edge treetop, estimates an azimuth angle based on the relation between the tree crown area and the vegetation boundary, and generates a 3D bounding box of a tree having the edge treetop based on the height of the edge treetop, the tree crown size corresponding to the edge treetop, and the azimuth angle.

## Description

### [Technical Field]

The present invention generally relates to vegetation management.

### [Background Art]

Intrusion of trees into assets (for example, power transmission lines or residential buildings) may cause asset damage or a fire (for example, forest fire). Accordingly, for example, a vegetation management method disclosed in Patent Literature 1 is known.

### [Citation List]

### [Patent Literature]

[Patent Literature 1] US11270111

### [Summary of Invention]

### [Technical Problem]

The method disclosed in Patent Literature 1 detects a tree crown by image processing based on similarity and discontinuity of spectral values of pixels in an image. However, in this method, the accuracy and robustness of tree crown detection are not high. In particular, in dense forests where tree crowns overlap each other, a large number of unnecessary tree crowns (for example, tree crowns of trees that cannot intrude into assets) may be detected.

### [Solution to Problem]

A system identifies a vegetation boundary in a target area by using a semantic segmentation model based on a remote sensing image and digital elevation model (DEM) data of the target area, the remote sensing image being a satellite image or an aerial photograph image of the target area. The system generates a height map that is data representing a height at each position in the target area based on the remote sensing image and the DEM data. The system detects, from the height map, an edge treetop that is a treetop satisfying a predetermined height condition and located within a buffer distance from an asset in the target area among treetops as uppermost parts of trees. The system estimates a tree crown size corresponding to the height represented by the height map by using a plant allometry model that is a domain knowledge-based model that takes height as input and outputs tree crown size. The system estimates a tree crown area from the detected tree crown size corresponding to the edge treetop, estimates an azimuth angle based on the relation between the tree crown area and the vegetation boundary, and generates a 3D bounding box of an edge tree, which is a tree having the edge treetop, based on the height of the edge treetop, the detected tree crown size corresponding to the edge treetop, and the azimuth angle.

### [Advantageous Effect of Invention]

According to the present invention, the accuracy and robustness of tree crown detection in vegetation management are improved.

### [Brief Description of Drawings]

[Figure 1] Figure 1 illustrates a configuration example of a vegetation management system according to an embodiment.
[Figure 2] Figure 2 illustrates an overall configuration example of a system including the vegetation management system.
[Figure 3] Figure 3 illustrates databases (DBs) stored in the vegetation management system.
[Figure 4] Figure 4 illustrates an overall flow of processing performed by the vegetation management system.
[Figure 5] Figure 5 illustrates a flow of treetop detection processing.
[Figure 6] Figure 6 illustrates a flow of tree crown size estimation processing.
[Figure 7] Figure 7 illustrates a flow of bounding box generation processing.
[Figure 8] Figure 8 illustrates a flow of risk analysis processing.
[Figure 9] Figure 9 schematically illustrates an outline of an example of height estimation processing.
[Figure 10] Figure 10 schematically illustrates an outline of an example of boundary identification processing.
[Figure 11] Figure 11 schematically illustrates an outline of an example of the treetop detection processing.
[Figure 12] Figure 12 schematically illustrates an example of detection of parameter values related to a 3D bounding box.
[Figure 13] Figure 13 schematically illustrates construction of the 3D bounding box.
[Figure 14] Figure 14 schematically illustrates construction of a bounding box of each edge tree.
[Figure 15] Figure 15 schematically illustrates an outline of risk analysis.

### [Description of Embodiment]

In the following description, an "interface apparatus" may be one or more interface devices. The one or more interface devices may be at least one of those described below.
- An I/O interface apparatus that is one or more input/output (I/O) interface devices. An input/output (I/O) interface device is an interface device for at least one of an I/O device and a remote display computer. An I/O interface device for the display computer may be a communication interface device. At least one I/O device may be a user interface device, for example, either of an input device such as a keyboard or a pointing device, and an output device such as a display device.
- A communication interface apparatus that is one or more communication interface devices. The one or more communication interface devices may be one or more communication interface devices (for example, one or more network interface cards (NICs)) of the same kind, or may be two or more communication interface devices (for example, a NIC and a host bus adapter (HBA)) of different kinds.

In the following description, the term "memory" refers to one or more memory devices, which are an example of one or more storage devices, and may be typically a main storage device. At least one memory device in the memory may be a volatile memory device or a non-volatile memory device.

In the following description, the term "persistent storage apparatus" may refer to one or more persistent storage devices, which are an example of one or more storage devices. A persistent storage device may be typically a non-volatile storage device (for example, an auxiliary storage device), and specifically, may be, for example, a hard disk drive (HDD), a solid state drive (SSD), a non-volatile memory express (NVME) drive, or a storage class memory (SCM).

In the following description, the term "storage apparatus" may refer to at least one of a memory and a persistent storage apparatus.

In the following description, the term "processor" may be one or more processor devices. At least one processor device may be typically a microprocessor device such as a central processing unit (CPU), whereas it may also be another kind of processor device such as a graphics processing unit (GPU). At least one processor device may be single-core or multi-core. At least one processor device may be a processor core. At least one processor device may be a processor device in a broad sense, such as a circuit (for example, a fieldprogrammable gate array (FPGA), a complex programmable logic device (CPLD), or an application specific integrated circuit (ASIC)) that is an assembly of gate arrays by a hardware description language and performs part or all of processing.

In the following description, functions may be described by using expressions such as "yyy unit", whereas the functions may be implemented by having one or more computer programs executed by a processor, may be implemented by one or more hardware circuits (for example, FPGA or ASIC), or may be implemented by a combination thereof. When a function is implemented by having a computer program executed by a processor, the function may be at least part of the processor because predetermined processing is performed by using an storage apparatus, an interface apparatus, and/or the like as appropriate. Processing described with a function as a subject may be processing performed by a processor or an apparatus including the processor. A computer program may be installed from a program source. The program source may be, for example, a program distribution computer or a computer-readable storage medium (for example, a non-volatile storage medium). Description of each function is merely exemplary, and a plurality of functions may be combined into a single function or a single function may be divided into a plurality of functions.

In the following description, data from which an output is obtained in response to an input may be described by using expressions such as "xxxDB", and the data may be data of any structure (for example, structured data or non-structured data), or may be a learning model, such as a neural network, a genetic algorithm, or a random forest, which generates an output in response to an input. Thus, "xxxDB" may be referred to as "xxx dataset". In the following description, the configuration of each DB is merely exemplary, and a single DB may be divided into two or more DBs or all or some of two or more DBs may be a single DB. The term "DB" is an abbreviation for database.

In the following description, a common reference sign among reference signs may be used when elements of the same kind are described without distinction, and respective reference signs may be used when elements of the same kind are distinguished.

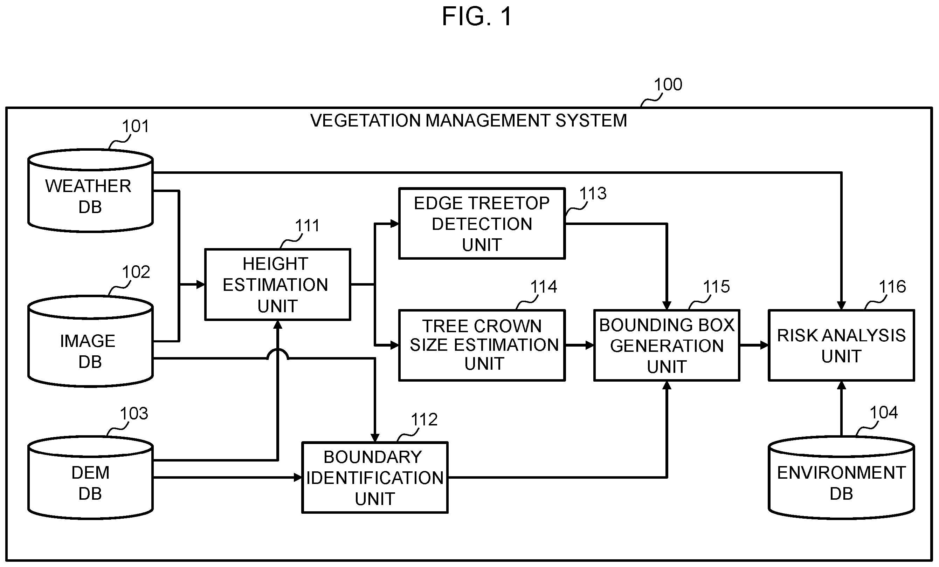

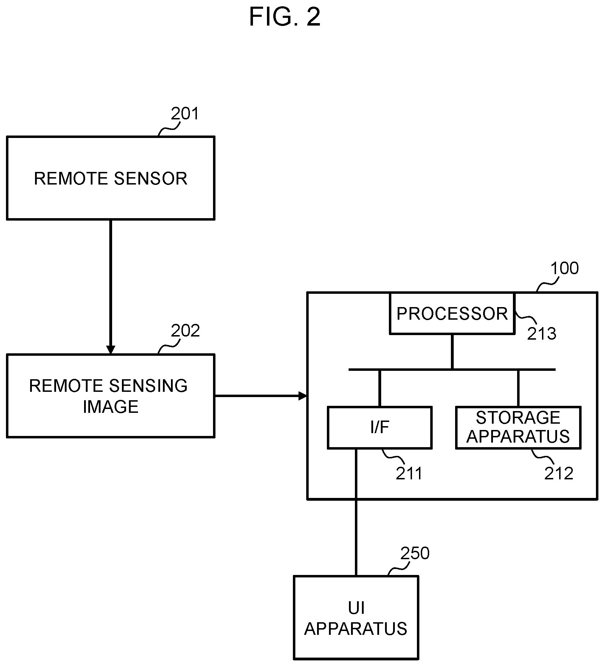

Figure 1 illustrates a configuration example of a vegetation management system according to an embodiment. Figure 2 illustrates an overall configuration example of a system including the vegetation management system.

A vegetation management system 100 is a physical computer system (one or more physical computers) in the present embodiment, whereas it may be a logical computer system (for example, a virtual machine or a cloud computing service) based on a physical computer system (for example, a cloud infrastructure). The vegetation management system 100 includes an interface apparatus 211, a storage apparatus 212, and a processor 213 coupled thereto. The vegetation management system 100 is, for example, a server system.

The interface apparatus 211 can communicate with a user interface (UI) apparatus 250 and a remote sensor 201 through a communication network (for example, the Internet or a wide area network (WAN)). The UI apparatus 250 may be an input device or a display device or may be a remote apparatus such as a client computer including them. A user of the UI apparatus 250 may be, for example, an administrator. The remote sensor 201 is typically a camera included in an artificial satellite or an airplane. Thus, a remote sensing image 202 output from the remote sensor 201 is typically image data of a satellite image or an aerial photograph image. The interface apparatus 211 receives the remote sensing image 202 output from the remote sensor 201, and the processor 213 (for example, a non-illustrated data interface unit) stores the remote sensing image 202 in the storage apparatus 212. Although not illustrated, the interface apparatus 211 receives weather data, digital elevation model (DEM) data, and environment data from an external data source (for example, a server), and the processor 213 (for example, the non-illustrated data interface unit) stores the received data in the storage apparatus 212.

Data and computer programs are stored in the storage apparatus 212. For example, a weather DB 101, an image DB 102, a DEM DB 103, and an environment DB 104 are stored in the storage apparatus 212. When computer programs are read from the storage apparatus 212 and executed by the processor 213, functions such as a height estimation unit 111, a boundary identification unit 112, an edge treetop detection unit 113, a tree crown size estimation unit 114, a bounding box generation unit 115, and a risk analysis unit 116 are implemented.

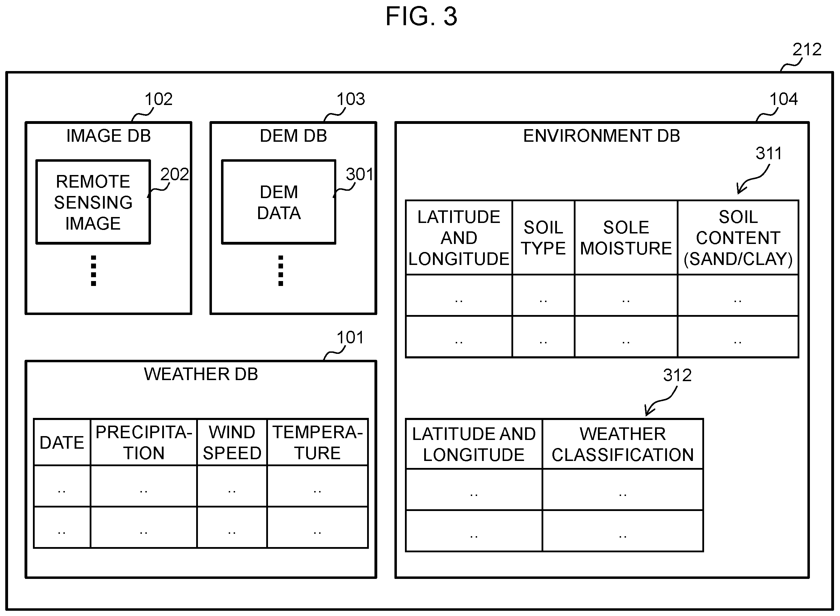

Figure 3 illustrates examples of the DBs 101 to 104 in the storage apparatus 212.

The weather DB 101 includes one or more pieces of weather data and represents, for example, a precipitation, a wind speed, and a temperature for each day. The image DB 102 includes one or more remote sensing images 202. The DEM DB 103 includes one or more pieces of DEM data 301. Note that each of the weather data, the remote sensing image 202, and the DEM data 301 may be provided for each area, and a latitude and longitude may be associated with each area. The sources of these data maybe, for example, a dataset of LANDFIRE.

The environment DB 104 includes one or more pieces of environment data, for example, soil data 311 and weather data 312. The soil data 311 represents, for each position (for example, each area), a latitude and longitude, a soil type, a soil moisture, and a soil content. The weather data 312 represents, for each position (for example, each area), a latitude and longitude and a weather classification (for example, a Koppen weather classification).

Examples of processing performed in the present embodiment will be described below, and functions of the vegetation management system 100 will be described as appropriate.

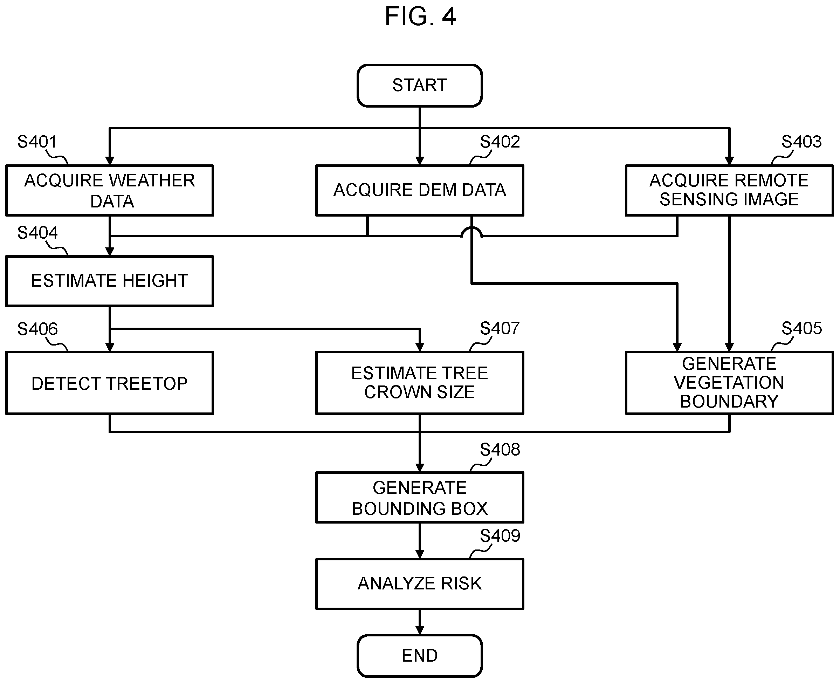

Figure 4 illustrates an overall flow of processing performed by the vegetation management system 100.

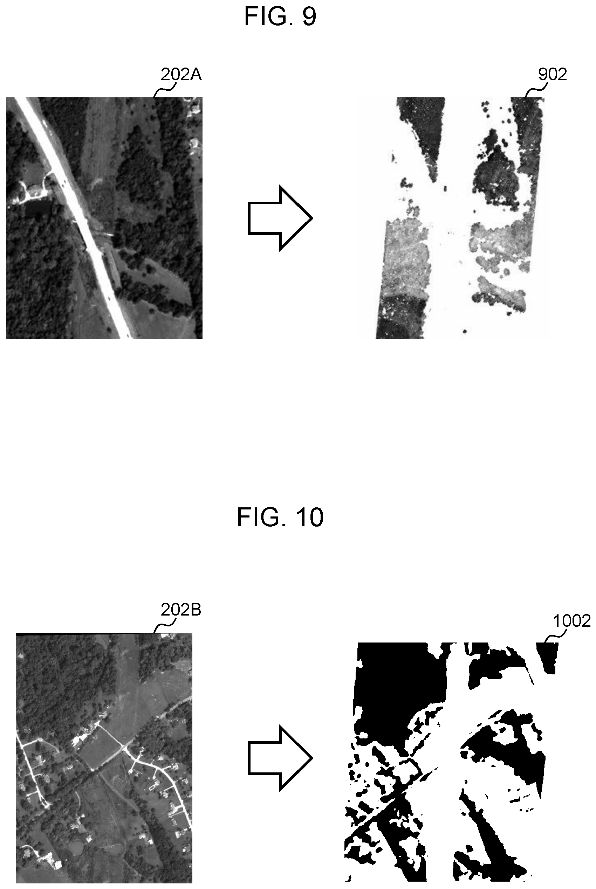

The height estimation unit 111 acquires the weather data from the weather DB 101 (S401), acquires the DEM data 301 from the DEM DB 103 (S402), and acquires the remote sensing image 202 (S403) from the image DB 102 for a vegetation management target area by using, for example, the latitude and longitude of the area as a key. The height estimation unit 111 performs height estimation processing based on the data acquired at S401 to S403 (S404). At S404, for example, the height estimation unit 111 generates a height map by using the data acquired at S401 to S403 and a height estimation model. Note that the height estimation model may be a model (typically, a machine learning model) that takes the weather data, the DEM data 301, and the remote sensing image 202 as input and outputs a height map (example of data representing a height). At S401 to S403, data for training the height estimation model may be acquired in addition to the data of the vegetation management target area, and at S404, the height estimation model may be trained by using the acquired data. The height map represents an estimated height for each area (for example, one or more pixels) in an image represented by the remote sensing image 202. Figure 9 schematically illustrates an outline of an example of the height estimation processing. When a remote sensing image 202A is input to the height estimation model, a height map 902 is output. The height map 902 has, for each pixel in the remote sensing image 202A, a value in accordance with a height at a position (latitude and longitude) corresponding to the pixel. The weather data may not necessarily need to be used for the height estimation.

The boundary identification unit 112 performs S402 and S403 for the vegetation management target area by using, for example, the latitude and longitude of the area as a key. The boundary identification unit 112 performs boundary identification processing (S405). At S405, the boundary identification unit 112 finds a vegetation boundary by segmentation. Specifically, at S405, the boundary identification unit 112 identifies a vegetation boundary by using the data acquired at S402 and S403 and a semantic segmentation model. Note that the semantic segmentation model may be a model that takes the DEM data 301 and the remote sensing image 202 as input and outputs a vegetation boundary identification result. At S402 and S403, data for training the semantic segmentation model may be acquired in addition to the data of the vegetation management target area, and at S405, the semantic segmentation model may be trained by using the acquired data. Figure 10 schematically illustrates an outline of an example of the boundary identification processing. When a remote sensing image 202B is input to the semantic segmentation model, a vegetation boundary identification result 1002 is output. The vegetation boundary identification result 1002 is image data in which a vegetation area represented by the remote sensing image 202B is masked. Specifically, for example, the vegetation boundary identification result 1002 is image data in which each pixel is expressed in binary, and pixels of the vegetation area are expressed in black, whereas pixels of an area other than the vegetation area are expressed in white. The vegetation boundary is the boundary of a generated mask of the vegetation area.

The edge treetop detection unit 113 performs treetop detection processing (S406). The tree crown size estimation unit 114 performs tree crown size estimation processing (S407). The bounding box generation unit 115 performs bounding box generation processing (S408). The risk analysis unit 116 performs risk analysis processing (S409).

S406 to S409 will be described below in detail.

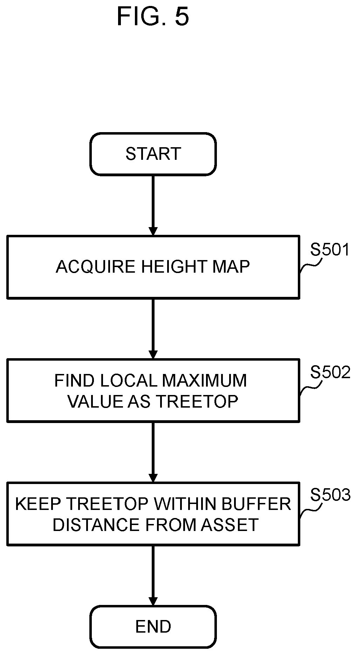

Figure 5 illustrates a flow of the treetop detection processing.

The edge treetop detection unit 113 acquires the height map estimated by the height estimation unit 111 (S501).

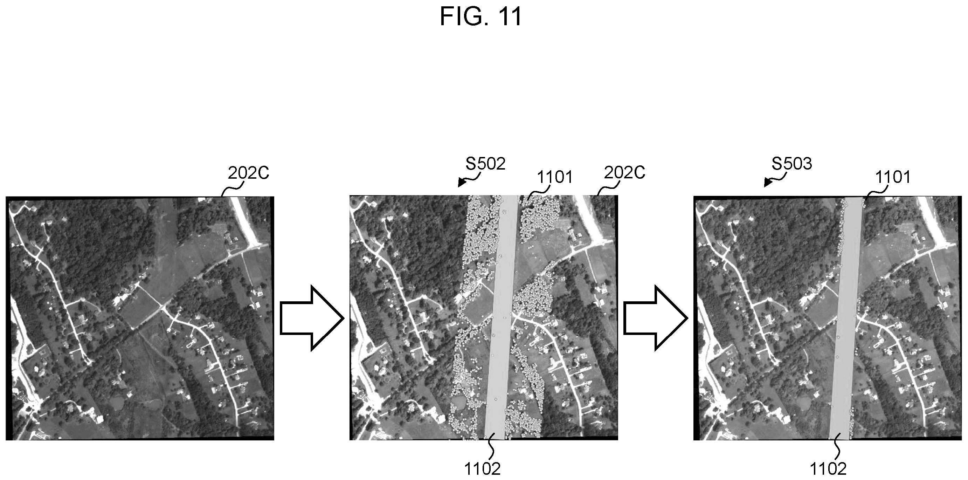

The edge treetop detection unit 113 finds a local maximum point as a treetop (an uppermost part of a tree) from the height map (S502). Specifically, for example, the edge treetop detection unit 113 finds a local maximum point assumed to be a treetop from the height map by applying a filtering window (a maximum filtering window) to the height map. Specifically, for example, as illustrated in Figure 11, a large number of treetops (local maximum points) 1101 are detected by using the height map of a remote sensing image 202C and the filtering window. Note that the remote sensing image 202C illustrated as an example in Figure 11 includes an asset area 1102. The asset area 1102 is an area defined as being occupied by an asset. In the present embodiment, the asset is a power transmission line or a utility pole supporting the power transmission line.

The edge treetop detection unit 113 keeps an edge treetop that is a treetop within a buffer distance from the asset among the treetops detected at S502 (S503). Specifically, for example, as illustrated in Figure 11, the edge treetop detection unit 113 keeps (retains) treetops 1101 within the buffer distance from the asset area 1102 among the plurality of treetops 1101 and invalidates other treetops. A treetop kept in this manner, in other words, a treetop within the buffer distance from the asset is also referred to as an "edge treetop" below. A tree crown having an edge treetop is also referred to as an "edge tree crown". A tree having an edge tree crown is also referred to as an "edge tree".

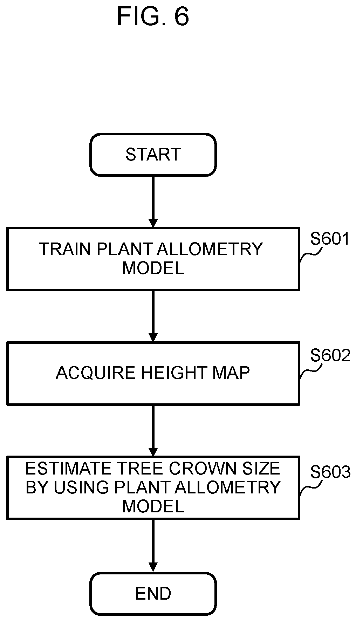

Figure 6 illustrates a flow of the tree crown size estimation processing.

The tree crown size estimation unit 114 trains a plant allometry model by using a dataset including a plurality of height tree crown pairs (S601). The plant allometry model is a domain knowledge-based model (typically, a machine learning model) that takes the height of a tree as input and outputs the size of the tree crown of the tree. A height tree crown pair is a pair of the height and the tree crown size. The plant allometry model may be trained in advance, and thus S601 may be omitted from the tree crown size estimation processing.

The tree crown size estimation unit 114 acquires the height map estimated by the height estimation unit 111 (S602).

The tree crown size estimation unit 114 estimates the tree crown sizes of all trees in the height map by inputting the height map to the plant allometry model (S603). Note that a height equal to or larger than a threshold value among the heights represented by the height map may be regarded as the height of a tree. Alternatively, a tree crown size may be output for each height represented by the height map.

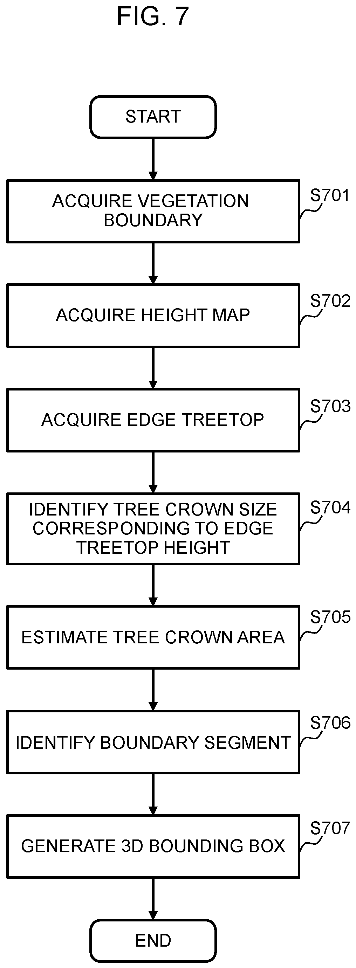

Figure 7 illustrates a flow of the bounding box generation processing.

The bounding box generation unit 115 acquires the vegetation boundary (vegetation boundary identification result) identified by the boundary identification unit 112 (S701), acquires the height map estimated by the height estimation unit 111 (S702), and acquires data related to each edge treetop (for example, data including position data of each edge treetop) detected by the edge treetop detection unit 113 (S703).

The bounding box generation unit 115 identifies the height of each edge treetop from the data acquired at S703 (data related to each edge treetop) and the height map acquired at S702, and identifies a tree crown size corresponding to the height of each edge treetop (the tree crown size of each edge tree crown) from results of the estimation by the tree crown size estimation unit 114 (the tree crown sizes of all trees in the height map) (S704).

The bounding box generation unit 115 estimates a tree crown area by using a tree crown radius (S705). The bounding box generation unit 115 identifies a boundary segment that is a range of the vegetation boundary acquired at S701 and is partitioned by the estimated tree crown area (S706).

The bounding box generation unit 115 generates three-dimensional bounding boxes (3D bounding boxes) of trees based on the results of S704 to S706 (S707).

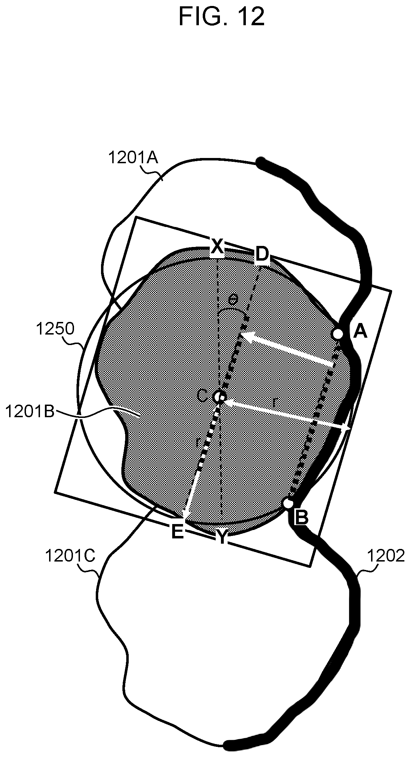

A specific example of the 3D bounding box generation will be described below with reference to Figures 12 to 14.

As illustrated in Figure 12, three edge tree crowns 1201A to 1201C (that is, three edge trees) are arranged side by side, and each of the edge tree crowns 1201A to 1201C partially overlaps an adjacent edge tree crown in a plan view. Taking the edge tree crown 1201B as example, the following describes generation of a 3D bounding box of an edge tree including the edge tree crown 1201B.

It is assumed that there is an edge treetop C as an edge treetop acquired at S703. It is also assumed that there is a tree crown radius r as a tree crown size identified at S704. In this case, at S705, the bounding box generation unit 115 estimates, as a tree crown area 1250 of the edge tree crown 1201B, an area surrounded by a circle having the edge treetop C as a center and having the tree crown radius r.

It is assumed that there is a vegetation boundary 1202 as the vegetation boundary acquired at S701. At S706, the bounding box generation unit 115 identifies a boundary segment AB that is a range of the vegetation boundary 1202 and is partitioned by the estimated tree crown area 1250. The boundary segment AB is a line segment connecting two intersection points A and B between the circumference of the tree crown area 1250 and the vegetation boundary 1202.

Then, at S707, the bounding box generation unit 115 generates a 3D bounding box of an edge tree including the edge tree crown 1201B, as follows.

Specifically, the bounding box generation unit 115 translates a straight line including the boundary segment AB (line segment AB) so as to pass through the edge treetop C (the center of the circle). Accordingly, intersection points D and E are formed between the circumference of the tree crown area 1250 and the translated straight line passing through the edge treetop C. In addition, there is a diameter XY in the vertical direction (intersection points X and Y between the circumference of the tree crown area 1250 and a straight line passing through the edge treetop C in the vertical direction). As a result, an angle XCD is formed. The angle XCD is an azimuth angle, and the size of the azimuth angle is represented by "θ". The height of the edge treetop C is represented by "h".

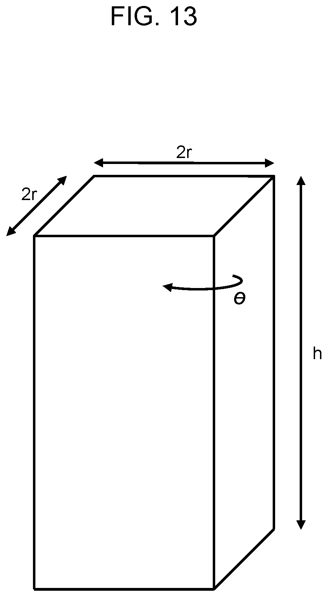

As illustrated in Figure 13, the bounding box generation unit 115 constructs a 3D bounding box having a width and depth of "2r" (twice r) and a height of "h", and rotates the 3D bounding box in the horizontal direction by the azimuth angle θ about the edge treetop C (that is, adjust the 3D bounding box to the orientation of the tree). The 3D bounding box thus rotated by the azimuth angle θ is defined as the 3D bounding box of the edge tree including the edge tree crown 1201B.

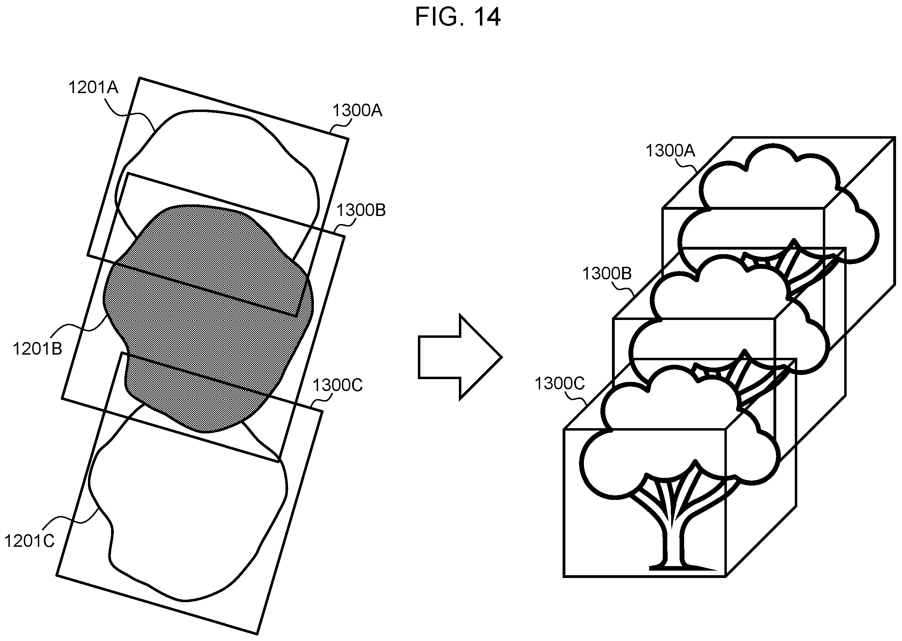

The bounding box generation unit 115 generates, for each edge treetop, a 3D bounding box of an edge tree having the edge treetop by the method described above with reference to Figures 12 and 13. As a result, as illustrated in Figure 14, 3D bounding boxes 1300A to 1300C are constructed for the edge tree crowns 1201A to 1201C illustrated in Figure 12. The bounding box generation unit 115 stores, for each edge tree, data related to the 3D bounding box of the edge tree in the storage apparatus 212. The data related to the 3D bounding box of each edge tree may include the values of the width, depth, and height, the value of the azimuth angle, and position data of the edge treetop.

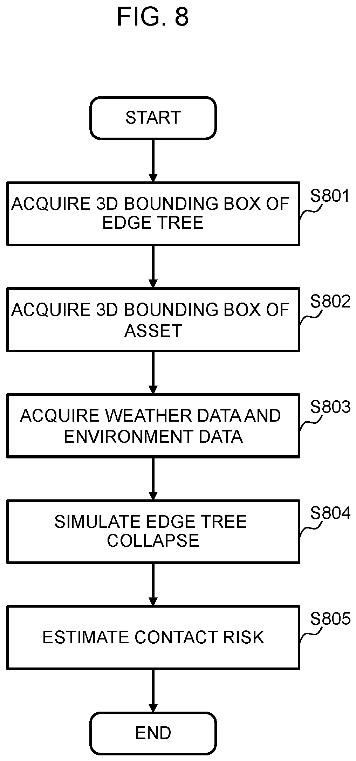

Figure 8 illustrates a flow of the risk analysis processing.

The risk analysis unit 116 acquires the 3D bounding box of each edge tree (the data related to the 3D bounding box) from the storage apparatus 212 (S801). Hereinafter, the 3D bounding box of an edge tree is also referred to as an "edge tree box".

The risk analysis unit 116 acquires the 3D bounding box of the asset (data related to the 3D bounding box) from the storage apparatus 212 (S802). For example, as for the remote sensing image 202C illustrated in Figure 11, the asset area 1102 is identified from the remote sensing image 202C, and data related to the 3D bounding box of each asset (for example, utility pole) in the asset area 1102 is stored in the storage apparatus 212. The 3D bounding box of each asset may be generated by the bounding box generation unit 115 based on the height map of the remote sensing image 202C. Hereinafter, the 3D bounding box of an asset is also referred to as an "asset box".

For the vegetation management target area, the risk analysis unit 116 acquires the weather data from the weather DB 101 and the environment data from the environment DB 104 by using, for example, the latitude and longitude of the area as a key (S803).

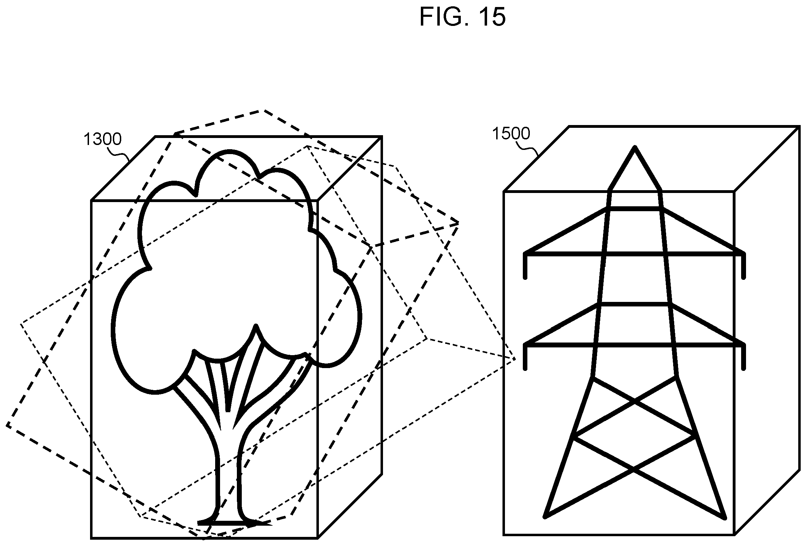

The risk analysis unit 116 simulates an edge tree collapse (S804). Specifically, for example, the risk analysis unit 116 disposes an edge tree box 1300 of each edge tree at a position based on position data of the edge tree, disposes the asset box of each asset at a position based on position data of the asset, and thereafter, as illustrated in Figure 15, rotates each edge tree box 1300 in a three-dimensional direction by, for example, 0° to 90°. The risk analysis unit 116 determines, for each edge tree, whether the edge tree box contacts the asset box.

The risk analysis unit 116 estimates a contact risk (S805). Specifically, for example, the risk analysis unit 116 may estimate a contact risk based on the number of edge tree boxes contacting any of the asset boxes (for example, calculate a numerical value representing the magnitude of the contact risk). The risk analysis unit 116 may calculate, from the weather data (for example, data representing a wind speed or the like) and the environment data (for example, data representing soil, a weather classification, or the like at the position of an edge treetop) acquired at S803, the probability and collapse degree of a collapse (for example, blow-in or fall-in) of the edge tree occurs in a duration represented by the acquired weather data, and may use the probability and the collapse degree as a basis for estimating the contact risk. The risk analysis unit 116 may also calculate a probability that an edge tree collapses and contacts an asset from the probability, the collapse degree, and the rotation angle when the edge tree box contacts the asset box, and may use the calculated contact probability as a basis for estimating the contact risk.

Various kinds of data acquired and generated in vegetation management processing may be stored in the storage apparatus 212. For example, a height map, position data of each detected edge treetop, data of the tree crown size of each edge tree crown, data indicating a vegetation boundary, data related to the 3D bounding box of each edge tree crown, data representing results of the risk analysis processing (for example, the simulation result at S804 and the contact risk estimated at S805) may be stored in the storage apparatus 212. The processor 213 (for example, the non-illustrated data interface unit) may display information represented by data stored in the storage apparatus 212 on the UI apparatus 250. Information to be displayed may be, for example, at least one of a height map, a remote sensing image on which objects representing edge treetops, vegetation boundaries, asset areas, and the like are placed, the 3D bounding box of each edge tree crown, animation of rotation of the 3D bounding box of each edge tree crown, the 3D bounding box of each asset, and results of the risk analysis processing (for example, the simulation result at S804 and the contact risk estimated at S805).

While one embodiment is described above, the embodiment is merely an example for description of the present invention and not intended to limit the scope of the present invention to the embodiment. The present invention may be implemented in various other forms.

The above description can be summarized as follows. The following summary may include supplementary description of the above description, and description of modifications.

The vegetation management system 100 includes the boundary identification unit 112, the height estimation unit 111, the edge treetop detection unit 113, the tree crown size estimation unit 114, and the bounding box generation unit 115 (in other words, at least the risk analysis unit 116 among the functions 111 to 116 illustrated in Figure 1 is not essential).

The boundary identification unit 112 identifies a vegetation boundary in a target area by using a semantic segmentation model based on the remote sensing image 202 (typically a satellite image or an aerial photograph image) of the target area and DEM data of the target area. The height estimation unit 111 generates a height map that is data representing a height at each position in the target area based on the remote sensing image and the DEM data. The edge treetop detection unit 113 detects, from the height map, an edge treetop 1101 that is a treetop satisfying a predetermined height condition and located within a buffer distance from an asset in the target area among treetops as uppermost parts of trees. The tree crown size estimation unit 114 estimates a tree crown size corresponding to the height represented by the height map by using a plant allometry model that is a domain knowledge-based model that takes height as input and outputs tree crown size. The bounding box generation unit 115 estimates a tree crown area from the detected tree crown size corresponding to the edge treetop 1101, estimates an azimuth angle based on the relation between the tree crown area and the vegetation boundary, and generates a 3D bounding box of an edge tree based on the height of the edge treetop, the detected tree crown size corresponding to the edge treetop 1101, and the azimuth angle.

Accordingly, the accuracy and robustness of tree crown detection in vegetation management can be improved.

Specifically, since 3D bounding boxes are generated only for edge trees based on domain knowledge, rather than for all trees, improvement in the accuracy of tree crown detection is expected. More specifically, since a satellite image or an aerial photograph image is used and the vegetation boundary and the plant allometry model (domain knowledge) are employed, high explainability is achieved.

Moreover, since the height of a 3D bounding box is the height (longest vertical distance) of an edge treetop as an uppermost part of an edge tree, coverage of the height of the edge tree is guaranteed. In addition, since risk analysis can be performed by using the 3D bounding box, higher robustness is achieved.

Note that the tree crown size estimation unit 114 may estimate, for the height at each position represented by the height map, a tree crown size corresponding to the height, or may estimate, only for each edge treetop detected by the edge treetop detection unit 113, a tree crown size corresponding to the height (and position) of the edge treetop.

A tree crown area may be the tree crown area 1250 as a circle having an edge treetop as a center C and having a tree crown radius as a value based on a tree crown size. The 3D bounding box of an edge tree may be a 3D bounding box 1300 illustrated in Figure 13, that is, a 3D bounding box having a width and depth of 2r and a height of h. The value "r" may be the tree crown radius. The value "h" may be the height of the edge treetop 1101. The azimuth angle may be the central angle XCD (for example, 90° or less) of the circle. The point X may be an intersection point between the circumference of the tree crown area 1250 and a straight line overlapping the diameter of the tree crown area 1250, passing through the center C, and extending in the vertical direction. The point D may be an intersection point between the circumference of the tree crown area and a straight line obtained by translating a straight line passing through two intersection points between the vegetation boundary and the circumference of the tree crown area so as to pass through the center C. In this manner, generation of a 3D bounding box that is suitable for the overall size and orientation of an edge tree is expected.

The vegetation management system 100 may include the risk analysis unit 116. The risk analysis unit 116 may dispose an edge tree box (the 3D bounding box of an edge tree) based on the position of the edge treetop, dispose an asset box (the 3D bounding box of an asset) based on the position of the asset, and estimate a contact risk based on whether the edge tree box contacts the asset box when rotated in a three-dimensional direction. Since the 3D bounding boxes have a width and a depth in addition to a height, accurate estimation of the contact risk is expected. Note that the risk analysis unit may calculate a probability that an edge tree collapses and contacts an asset based on at least one of weather data related to weather in a target area (for example, data representing temporal sequence of the wind speed in the target area (for example, forecast data)), and environment data including data related to soil of the edge tree (for example, soil at or around the position of the edge treetop), and may use the probability as a basis for estimating the contact risk. Accordingly, further accurate estimation of the contact risk is expected. The risk analysis unit 116 may identify a rotation angle (the rotation angle of the edge tree box) when the edge tree box contacts the asset box, and may calculate a probability that the edge tree collapses to extent of the rotation angle based on the rotation angle and at least one of the weather data and the environment data (a probability that the edge tree collapses and contacts the asset).

### [Reference Sign List]

100 vegetation management system

## Claims

1. A vegetation management system comprising:
a boundary identification unit configured to identify a vegetation boundary in a target area by using a semantic segmentation model based on a remote sensing image and digital elevation model (DEM) data of the target area, the remote sensing image being a satellite image or an aerial photograph image of the target area;
a height estimation unit configured to generate a height map that is data representing a height at each position in the target area based on the remote sensing image and the DEM data;
an edge treetop detection unit configured to detect, from the height map, an edge treetop that is a treetop satisfying a predetermined height condition and located within a buffer distance from an asset in the target area among treetops as uppermost parts of trees;
a tree crown size estimation unit configured to estimate a tree crown size corresponding to the height represented by the height map by using a plant allometry model that is a domain knowledge-based model that takes height as input and outputs tree crown size; and
a bounding box generation unit configured to estimate a tree crown area from the detected tree crown size corresponding to the edge treetop, estimate an azimuth angle based on the relation between the tree crown area and the vegetation boundary, and generate a 3D bounding box of an edge tree, which is a tree having the edge treetop, based on the height of the edge treetop, the detected tree crown size corresponding to the edge treetop, and the azimuth angle.

2. The vegetation management system according to claim 1, further comprising a risk analysis unit configured to dispose an edge tree box, which is the 3D bounding box of the edge tree, based on the position of the edge treetop, dispose an asset box, which is a 3D bounding box of the asset, based on the position of the asset, and estimate a contact risk based on whether the edge tree box contacts the asset box when rotated in a three-dimensional direction.

3. The vegetation management system according to claim 2, wherein the risk analysis unit calculates a probability that the edge tree collapses and contacts the asset based on at least one of weather data related to weather in the target area and environment data including data related to soil of the edge tree, and uses the probability as a basis for estimating the contact risk.

4. The vegetation management system according to claim 1, wherein
the tree crown area is a circle having the edge treetop as a center C and having a tree crown radius as a value based on the tree crown size,
the 3D bounding box has a width and length of 2r and a height of h, where
r is the tree crown radius, and
h is the height of the edge treetop,
the azimuth angle is a central angle XCD of the circle, where
X is an intersection point between the circumference of the tree crown area and a straight line overlapping the diameter of the tree crown area, passing through the center C, and extending in the vertical direction, and
D is an intersection point between the circumference of the tree crown area and a straight line obtained by translating a straight line passing through two intersection points between the vegetation boundary and the circumference of the tree crown area so as to pass through the center C.

5. A vegetation management method that is executed by a computer to:
identify a vegetation boundary in a target area by using a semantic segmentation model based on a remote sensing image and digital elevation model (DEM) data of the target area, the remote sensing image being a satellite image or an aerial photograph image of the target area;
generate a height map that is data representing a height at each position in the target area based on the remote sensing image and the DEM data;
detect, from the height map, an edge treetop that is a treetop satisfying a predetermined height condition and located within a buffer distance from an asset in the target area among treetops as uppermost parts of trees;
estimate a tree crown size corresponding to the height represented by the height map by using a plant allometry model that is a domain knowledge-based model that takes height as input and outputs tree crown size; and
estimate a tree crown area from the detected tree crown size corresponding to the edge treetop, estimate an azimuth angle based on the relation between the tree crown area and the vegetation boundary, and generate a 3D bounding box of an edge tree, which is a tree having the edge treetop, based on the height of the edge treetop, the detected tree crown size corresponding to the edge treetop, and the azimuth angle.

6. A computer program that is executed by a computer to:
identify a vegetation boundary in a target area by using a semantic segmentation model based on a remote sensing image and digital elevation model (DEM) data of the target area, the remote sensing image being a satellite image or an aerial photograph image of the target area;
generate a height map that is data representing a height at each position in the target area based on the remote sensing image and the DEM data;
detect, from the height map, an edge treetop that is a treetop satisfying a predetermined height condition and located within a buffer distance from an asset in the target area among treetops as uppermost parts of trees;
estimate a tree crown size corresponding to the height represented by the height map by using a plant allometry model that is a domain knowledge-based model that takes height as input and outputs tree crown size; and
estimate a tree crown area from the detected tree crown size corresponding to the edge treetop, estimate an azimuth angle based on the relation between the tree crown area and the vegetation boundary, and generate a 3D bounding box of an edge tree, which is a tree having the edge treetop, based on the height of the edge treetop, the detected tree crown size corresponding to the edge treetop, and the azimuth angle.
